(19) Europäisches Patentamt
European Patent Office
Office européen des brevets

(11) Veröffentlichungsnummer: **0 185 358**
**B1**

(12) # EUROPÄISCHE PATENTSCHRIFT

(45) Veröffentlichungstag der Patentschrift: **23.11.88**

(51) Int. Cl.⁴: **G 01 P 3/36**

(21) Anmeldenummer: **85116095.2**

(22) Anmeldetag: **17.12.85**

(54) **Einrichtung zur Messung der Drehgeschwindigkeit.**

(30) Priorität: **21.12.84 DE 3446663**

(43) Veröffentlichungstag der Anmeldung: **25.06.86 Patentblatt 86/26**

(45) Bekanntmachung des Hinweises auf die Patenterteilung: **23.11.88 Patentblatt 88/47**

(84) Benannte Vertragsstaaten: **DE FR GB IT NL**

(56) Entgegenhaltungen:
**DE-A-3 040 514**
**DE-A-3 136 688**
**DE-A-3 247 014**

(73) Patentinhaber: **Standard Elektrik Lorenz Aktiengesellschaft, Lorenzstrasse 10, D-7000 Stuttgart 40 (DE)**

(72) Erfinder: **Auch, Wilfried, Dr., Weimarstrasse 6, D-7144 Asperg (DE)**
Erfinder: **Graf, Helmut, Kaiserslauterer Strasse 62, D-7000 Stuttgart 31 (DE)**
Erfinder: **Schlemper, Eberhard, Parkweg 3, D-7143 Vaihingen 7 (DE)**

(74) Vertreter: **Schmidt, Werner, Dipl.- Phys., Standard Elektrik Lorenz AG Patent- und Lizenzwesen Postfach 30 09 29, D-7000 Stuttgart 30 (DE)**

**EP 0 185 358 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung geht aus von einer Einrichtung zur Messung der Drehgeschwindigkeit wie im Oberbegriff des Anspruchs 1 angegeben. Eine solche Einrichtung ist aus der DE-PS-3 136 688 bekannt.

Bei einer solchen Einrichtung ist es von Nachteil, daß das auszuwertende Signal unter anderem von der Intensität ($I_0$) des von der Lichtquelle abgegebenen Lichts und der Dämpfung ($\alpha$) des Lichts bei der Ausbreitung in den Lichtwegen abhängt. Schwankungen dieser Größen machen sich bei der Auswertung nachteilig bemerkbar.

In der DE-OS-3 040 514 ist eine gattungsgleiche Einrichtung zur Messung der Drehgeschwindigkeit bekannt. Bei der dort beschriebenen Einrichtung besteht eine der Lösungen darin, daß das Ausgangssignal des Photodetektors in mindestens zwei Teilsignale, die sich durch ihre Frequenz unterscheiden, aufgeteilt wird. Aus einem der Teilsignale wird ein Regelsignal abgeleitet. Mit dem Regelsignal erfolgt eine Regelung eines Phasenmodulators, welcher das Licht, das eine spulenförmig angeordnete Lichtleitfaser durchläuft, moduliert. Die Regelung erfolgt so, daß mindestens ein Teilsignal möglichst klein wird.

Aufgabe der Erfindung ist es, eine weitere Lösung anzugeben, mit der die von Intensitätsschwankungen der Lichtquelle verursachten Störungen beseitigt werden.

Die Lösung dieser Aufgabe erfolgt mit den im Patentanspruch 1 angegebenen Mitteln. Vorteilhafte Weiterbildungen sind den Unteransprüchen zu entnehmen.

Bei der neuen Lösung wird nicht ein Modulator sondern ein Verstärker geregelt. Bei der Realisierung der Regelschaltung müssen daher die Eigenschaften des Modulators nicht berücksichtigt werden. Die Regelschleife zur Regelung des Verstärkers ist einfach realisierbar. Weiterhin ist es bei dieser Art von Regelung nicht erforderlich, daß zur Ermittlung der Drehgeschwindigkeit mehrere Signale ausgewertet werden müssen.

Die Erfindung wird anhand der einzigen Zeichnung, die ein Blockschaltbild der neuen Einrichtung ist, beispielsweise näher erläutert.

Ein in einem Laser 1 erzeugter Lichtstrahl wird durch einen Strahlteiler 2 in zwei Teilstrahlen aufgeteilt.

Der eine Teilstrahl gelangt über einen Polarisator 17 und ein Raumfilter 18 zu einem weiteren Strahlteiler 3, der diesen Teilstrahl wiederum in zwei Teilstrahlen aufteilt. Das Raumfilter ist als Monomodelichtleitfaser realisiert und gewährleistet, daß der Teilstrahl nach dem Durchlaufen der Monomodelichtleitfaser nur noch einen Modus aufweist. Diese weiteren Teilstrahlen werden den beiden Enden 12 und 15 einer Lichtleitfaser 5 zugeführt. Im Bereich des einen Endes 12 der Lichtleitfaser 5 ist ein Phasenmodulator 4 vorgesehen, der den einen Teilstrahl vor und den anderen nach dem Durchlaufen der Lichtleitfaser phasenmoduliert. Die Lichtleitfaser 5 ist spulenförmig angeordnet. Die beiden Teilstrahlen gelangen wieder, nachdem sie die Lichtleitfaser 5 gegensinnig durchlaufen haben, zu dem Strahlteiler 3, in dem sie einander überlagert werden. Der durch die Überlagerung erzeugte Lichtstrahl wird dem ersten Strahlteiler 2 zugeführt. Dieser lenkt einen Teil dieses Lichtstrahls auf einen Photodetektor 6, der das optische Signal in ein elektrisches Signal umwandelt. Die bisher beschriebene Anordnung entspricht der bekannten Anordnung. Das Ausgangssignal des Photodetektors 6 wird einem regelbaren Verstärker 7 zugeführt. Dessen Ausgangssignal wird einem ersten Bandpaß 8, dessen Mittelfrequenz $f_m$ ist, und einem weiteren Bandpaß 9, dessen Mittenfrequenz $2f_m$ ist, zugeführt. Von den beiden Bandpässen 8 und 9 werden also nur Signale mit den Frequenzen $f_m$ oder $2f_m$ durchgelassen. Das Signal mit der Frequenz $f_m$ wird einem phasenempfindlichen Gleichrichter 16 zugeführt. Das Signal mit der Frequenz $2f_m$ gelangt zu einem Demodulator 10. Das Demodulatorausgangssignal wird zu einem Operationsverstärker 11 geleitet. Als weiteres Eingangssignal erhält der Operationsverstärker 11 ein Referenzsignal $U_R$. In dem Operationsverstärker werden das Demodulatorausgangssignal und das Referenzsignal miteinander verglichen und abhängig von diesem Vergleich ein Regelsignal für den regelbaren Verstärker erzeugt. Als Operationsverstärker kann das Bauelement OP07 der Firma Precision Monolithics Inc., Santa Clara, Kalifornien, USA verwendet werden. Durch diese Regelung wird bewirkt, daß das Ausgangssignal des regelbaren Verstärkers 7 unabhängig von Schwankungen der Intensität des Laserausgangssignals und unabhängig von Schwankungen der Dämpfung $\alpha$ in den Lichtausbreitungswegen stets dieselbe Amplitude hat.

Der phasenempfindliche Gleichrichter 16 erhält als weiteres Eingangssignal das Ausgangssignal eines Oszillators 13 mit der Frequenz $f_m$. Das Ausgangssignal des Oszillators 13 wird außerdem einem Verstärker 14 zugeführt und das Ausgangssignal dieses Verstärkers 14 ist das Steuersignal für den Phasenmodulator 4.

Dadurch, daß im Gleichrichter 16 eine phasenempfindliche Gleichrichtung durchgeführt wird, erreicht man, daß man auch das Vorzeichen der Drehbewegung erhält.

Das Ausgangssignal des Photodetektors 6 ist beschreibbar durch

$$i(t) \sim I.[1 + J_0\,(2\Phi_0 \sin \tfrac{2\pi f_m \tau}{2}) \cdot \cos \Delta\Phi_s]$$

$$+ 2I_0 \cdot J_1(2\Phi_0 \sin \tfrac{2\pi f_m \tau}{2}) \cdot \sin \Delta\Phi_s - \cos[2\pi f_m(t - \tau/2)]$$

$$- 2I_0 \cdot J_2(2\Phi_0 \sin \tfrac{2\pi f_m \tau}{2}) \cdot \cos \Delta\Phi_s \cdot \cos\,[2\pi 2 f_m(t - \tau/2)]$$

$$+ \ldots$$

Erfolgt die Regelung des regelbaren Verstärkers 7 so, daß die Amplituden des Ausgangssignals des Demodulators 10 und des Referenzsignals $U_R$ gleich sind, dann ist das Ausgangssignal des phasenempfindlichen Gleichrichters beschreibbar durch

$$U_S = U_R \cdot \frac{K_1}{K_2} \cdot \frac{J_1(\ldots)}{J_2(\ldots)} \cdot \frac{\sin\Delta\Phi_s}{\cos\Delta\Phi_s}$$

$$\tan\Delta\Phi_s = \tan(k_3 \cdot \Omega)$$

In den obigen Gleichungen sind:

| | |
|---|---|
| $I_0$ | die Intensität des vom Laser 1 abgegebenen Lichtstrahls |
| $J_0$, $J_1$, $J_2$ | Besselfunktionen, |
| $\tau$ | Laufzeit des Lichtstrahls in der spulenförmig angeordneten Lichtleitfaser, |
| $\Delta\Phi_s$ | die durch den Sagnaceffekt bedingte Phasenverschiebung, |
| $\Omega$ | die Drehgeschwindigkeit, |
| K1, K2, K3 | Konstanten. |

Aus der Gleichung für $U_s$ kann $\Omega$ ermittelt werden.

Bei der Dimensionierung der Einrichtung zur Messung der Drehgeschwindigkeit muß darauf geachtet werden, daß die Messungen in dem Bereich, in dem Winkelgeschwindigkeiten gemessen werden sollen, nicht mehrdeutig werden. Die Messungen werden mehrdeutig, wenn $\Delta\Phi_s \geqq 90°$ ist. Ist die maximal zu messende Drehgeschwindigkeit gleich 400°/sek., dann kann die Einrichtung zur Messung der Geschwindigkeit wie folgt bemessen werden, wenn die Wellenlänge $\lambda$ des zu verwendenden Lichts 820 nm ist:

Länge der Lichtleitfaser: 100 m;

Radius der spulenförmig angeordneten Lichtleitfaser: 35 mm.

**Patentansprüche**

1. Einrichtung zur Messung der Drehgeschwindigkeit, bei der ein in einer Lichtquelle erzeugter Lichtstrahl in zwei Teilstrahlen aufgeteilt wird und diese beiden Teilstrahlen eine Lichtleitfaser, die so angeordnet ist, daß sie eine Fläche mindestens einmal umschließt, gegensinnig durchlaufen, bei der mindestens der eine Teilstrahl vor dem Durchlaufen der Lichtleitfaser moduliert wird, bei der die beiden Teilstrahlen nach dem Durchlaufen der Lichtleitfaser einander überlagert werden und der so erzeugte Lichtstrahl einem Photodetektor zugeführt wird, und bei der aus dem Ausgangssignal des Photodetektors die Drehgeschwindigkeit ermittelt wird,
dadruch gekennzeichnet,
Ausgangssignal des Photodetektors (6) einem regelbaren Verstärker (7) zugeführt wird, daß dessen Ausgangssignal in zwei Teilsignale, die sich durch ihre Frequenz unterscheiden, aufgeteilt wird (8, 9), daß das eine Teilsignal mit einem Referenzsignal ($U_R$) konstanter Amplitude verglichen wird, und daß abhängig von diesem Vergleich der regelbare Verstärker so geregelt wird, daß die Amplituden von Teilsignal und Referenzsignal in einem konstanten Verhältnis zueinander stehen.

2. Einrichtung zur Messung der Drehgeschwindigkeit nach Anspruch 1, dadurch gekennzeichnet, daß der erste Teilstrahl mit der Modulationsfrequenz fm und der zweite Teilstrahlt mit der doppelten Modulationsfrequenz 2fm moduliert sind.

3. Einrichtung nach Anspruch 2, dadurch gekennzeichnet, daß zur Regelung der Verstärkung der Teilstrahl, dessen Frequenz gleich der doppelten Modulationsfrequenz 2fm ist, ausgewertet wird.

**Claims**

1. Rotation rate measuring instrument wherein a light beam generated in a light source is split into two beam portions which travel in opposite directions through an optical fiber arranged to enclose an area at least once, wherein at least one of the two beam portions is modulated before entering the optical fiber, wherein the two beam portions are combined after they have emerged from the optical fiber, wherein the light beam so produced is directed onto a photodetector, and wherein the rotation rate is derived from the output signal of the photodetector,
characterized in that the output signal of the photodetector (6) is fed to a variable-gain amplifier (7), that the output signal of the variable-gain amplifier (7) is separated (8, 9) into two components having different frequencies, that one of the components is compared with a reference signal ($U_R$) of a constant amplitude, and that, in dependence on the result of said comparison, the gain of the variable-gain amplifier is controlled in such a way that the amplitudes of said one component and said reference signal have a constant relationship with respect to one another.

2. A rotation rate measuring instrument as claimed in claim 1, characterized in that the first beam portion is modulated at the modulation frequency fm, and the second beam portion at twice the modulation frequency 2fm.

3. A rotation rate measuring instrument as claimed in claim 2, characterized in that, to control the gain, the beam portion whose frequency is equal to twice the modulation frequency 2fm is evaluated.

**Revendications**

1. Appareil de mesure de vitesse de rotation dans lequel un faisceau lumineux engendre par une source de lumière est divisé en deux faisceaux partiels qui parcourent, dans des directions opposées, une fibre optique disposée de manière à entourer une surface au moins une fois, dans lequel au moins un des deux faisceaux partiels est modulé avant d'entrer dans la fibre optique, dans lequel les deux faisceaux partiels émergeant de la fibre optique sont combinés, dans lequel le faisceau lumineux ainsi obtenu est dirigé sur un photodétecteur et dans lequel la vitesse de rotation est dérivée du signal de sortie du photodétecteur, caractérisé en ce que le signal de sortie du photodétecteur (6) est appliqué à un amplificateur à gain variable (7), en ce que le signal de sortie de l'amplificateur à gain variable (7) est séparé (8, 9) en deux signaux partiels ayant des fréquences différentes, en ce que l'un des signaux partiels est comparé à un signal de référence ($U_R$) d'amplitude constante et en ce que, selon le résultat de cette comparaison, le gain de l'amplificateur à gain variable est ajusté de manière que les amplitudes dudit signal partiel comparé et dudit signal de référence aient un rapport constant.

2. Appareil de mesure de vitesse de rotation conforme à la revendication 1, caractérisé en ce que le premier faisceau partiel est modulé par la fréquence de modulation fm et le deuxième faisceau partiel par le double de la fréquence de modulation 2fm.

3. Appareil de mesure de vitesse de rotation conforme à la revendication 1, caractérisé en ce que, pour le réglage de l'amplification, on évalue le faisceau partiel dont la fréquence 2fm est le double de la fréquence de modulation.

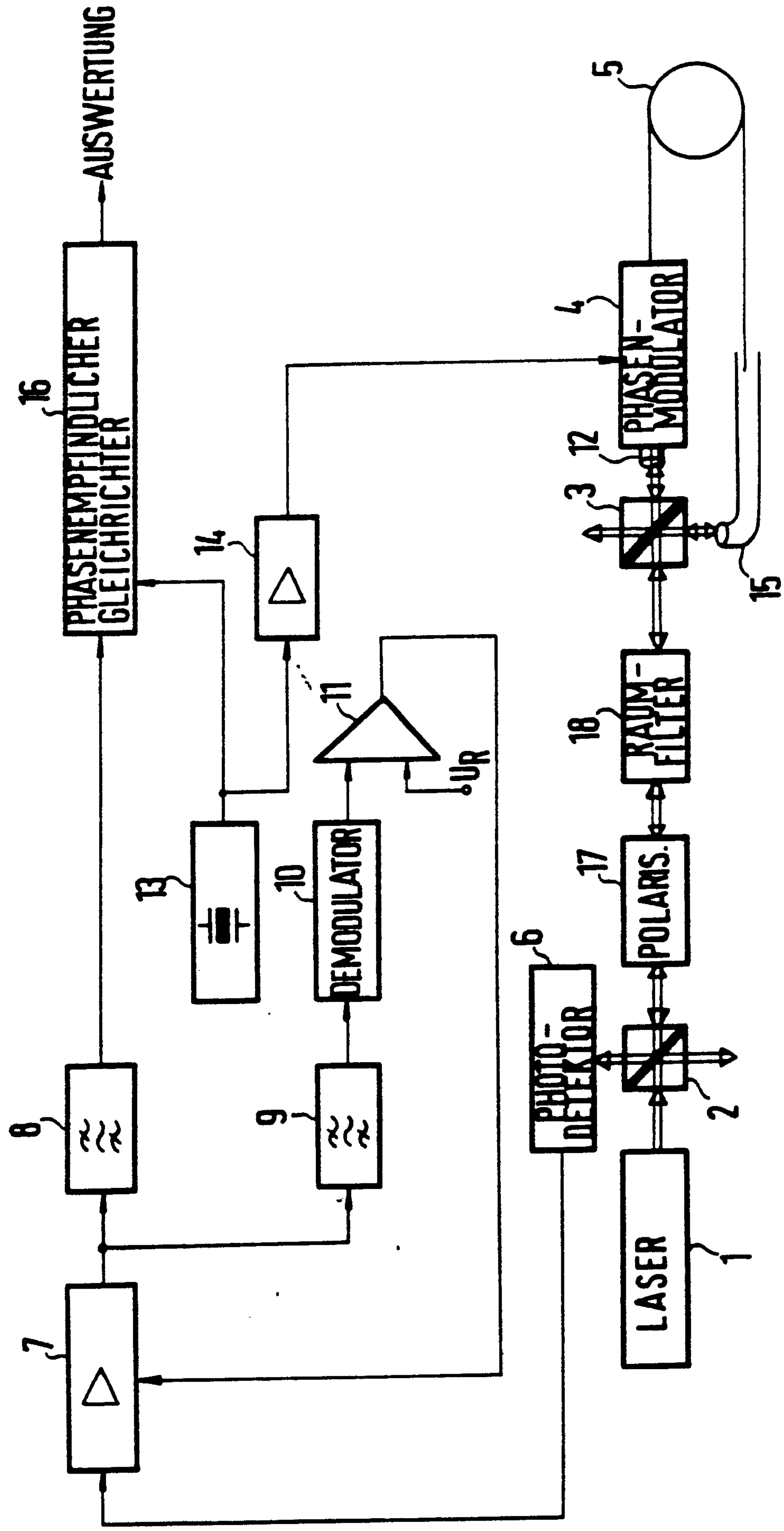

AUSWERTUNG
16
PHASENEMPFINDLICHER GLEICHRICHTER
14
13
10
DEMODULATOR
11
U_R
9
8
7
6
PHOTO-DETEKTOR
LASER
1
2
17
POLARIS.
18
RAUM-FILTER
3
15
12
4
PHASEN-MODULATOR
5